(19) Europäisches Patentamt
European Patent Office
Office européen des brevets

(11) **EP 1 360 699 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(21) Anmeldenummer: **02717951.4**

(22) Anmeldetag: **14.02.2002**

(51) Int Cl.:
***G21K 1/06*** *(2006.01)*

(86) Internationale Anmeldenummer:
**PCT/DE2002/000572**

(87) Internationale Veröffentlichungsnummer:
**WO 2002/065481 (22.08.2002 Gazette 2002/34)**

(54) **ANORDNUNG FÜR RÖNTGENANALYTISCHE ANWENDUNGEN**

DEVICE FOR X-RAY ANALYTICAL APPLICATIONS

DISPOSITIF POUR APPLICATIONS D'ANALYSE AUX RAYONS X

(84) Benannte Vertragsstaaten:
**AT BE CH CY DE DK ES FI FR GB GR IE IT LI LU MC NL PT SE TR**

(30) Priorität: **14.02.2001 DE 10107914**

(43) Veröffentlichungstag der Anmeldung:
**12.11.2003 Patentblatt 2003/46**

(73) Patentinhaber: **Fraunhofer-Gesellschaft zur Förderung der angewandten Forschung e.V. 80686 München (DE)**

(72) Erfinder:
• **HOLZ, Thomas 01109 Dresden (DE)**
• **DIETSCH, Reiner 01217 Dresden (DE)**

(74) Vertreter: **Pfenning, Meinig & Partner GbR Patent- und Rechtsanwälte Gostritzer Strasse 61-63 01217 Dresden (DE)**

(56) Entgegenhaltungen:
DE-A- 4 407 278   DE-A- 4 443 853
US-A- 5 031 199   US-A- 5 646 976
US-A- 5 799 056

**Beschreibung**

Die Erfindung betrifft eine Anordnung für röntgenanalytische Anwendungen, die z.B. für die Röntgendiffraktometrie, die Reflektometrie und/oder die Fluoreszenzanalyse eingesetzt werden kann. So lassen sich beispielsweise auch sehr kleine Probenbereiche oder Einschlüsse < 1 mm in Schichten oder in einer Matrix analysieren.

Neben den, seit längerem genutzten natürlichen Kristallen (z.B. Si, Ge, LiF, Graphit) werden in jüngerer Vergangenheit zur Strahlformung und Monochromatisierung, insbesondere bei Photonenenergien E > 3keV röntgenoptische Elemente mit Nanometermultischichten eingesetzt, wie dies beispielsweise von T.W. Barbee Jr., "Multilayer for X-Ray Optical Applications"; X-Ray Microscopy; G.Schmahl, D.Rudolph; Springer Verlag Berlin, Heidelberg, New York, Tokyo; 1984; Seiten 144 bis 162 und in WO 96/04665 A1 beschrieben ist. Diese röntgenoptischen Elemente gestatten in einigen Applikationen den Ersatz der bis dahin erforderlichen Bragg-Brentano-Gemometrie durch Parallelstrahlgeometrie. Dadurch konnte die Intensität im erzeugten Parallelstrahl durch den Einsatz parabolisch gekrümmter Gradienten-Multischichten, die üblicherweise als "Göbel Spiegel" bezeichnet werden, erhöht werden. Diese Göbel Spiegel werden bisher gewerblich in Röntgenreflektometern und Diffraktometern auch für verschiedene Wellenlängen angeboten. Durch die Nutzung paralleler Röntgenstrahlung können Intensitätsgewinne mit einem Faktor von zwei bis drei, in Extremfällen sogar mit einem Faktor von zehn erreicht werden. Außerdem kann die Probenvorbereitung und -justierung erleichtert werden.

Bisher wird die mit einem Strichbrennfleck von einer Röntgenstrahlquelle erzeugte divergente und polychromatische Röntgenstrahlung mit einem solchen Göbel Spiegel in einen Parallelstrahl umgewandelt und gleichzeitig monochromatisiert, wie dies von U.W. Arndt; Appl. Crystallograph. 23 (1990); Seiten 161 bis 168 und in DE 44 43 853 A1 für Ka-Strahlung beschrieben ist. Der Fokus der Parabel liegt bei diesen bekannten Lösungen in den Strichbrennflecken der Röntgenstrahlquellen.

Bei Röntgenstrahlquellen mit Punktbrennflecken werden gegenwärtig ausschließlich zwei um 90° zueinander gedrehte und hintereinander angeordnete Göbel Spiegel, in sogenannter Kirkpatrick-Baez-Anordnung eingesetzt, wie dies von P.Kirpatrick, u.a. in J. Opt. Soc. Am.; 38 (1948), Seite 766 beschrieben ist, wobei hier der Fokus beider Göbel-Spiegel im Punktbrennfleck der Röntgenstrahlquelle liegt.

Eine um 90° zueinander gekippte Anordnung zweier Göbel Spiegel in einer ähnlich dazu ausgebildeten Anordnung ist beispielsweise aus US 6,014,423 oder US 6,041,099 bekannt.

Bei Voraussetzung idealer Verhältnisse könnte ein solcher parabelförmiger Göbel Spiegel, die vom Brennpunkt divergent ausgehenden Röntgenstrahlen mit der Wellenlänge $\lambda_0$ als Parallelstrahlbündel ohne divergente Anteile abbilden. In der Realität hat aber der Brennfleck einer Röntgenstrahlquelle eine endliche Größe H, so dass die Einfallswinkel $\theta_i$ einzelner Röntgenstrahlen an unterschiedlichen Orten $X_i$ um jeweils einen Betrag $\Delta\Phi_i$, d.h. $\Theta_i = \Theta_0(x_i) \pm 1/2 \, \Delta\Theta(x_i)$ schwanken. Die Winkelabhängigkeit des Reflexionsvermögens des Multischichtsystems eines Göbel Spiegels an den unterschiedlichen Orten $X_i$ kann ebenfalls nicht in einer Form

$$R = f(\Theta_i) = R(\Theta_i) * \delta(\Theta_i - \Theta_0)$$

mit

$$\delta(x) = \begin{cases} 1; & x = 0 \\ 0; & x \neq 0 \end{cases}$$

beschrieben werden.

Daraus folgt:

$$R(\Theta_i) = 0 \mid \Theta_i \neq \Theta_0$$

$$R(\Theta_i) = R(\Theta_0) \mid \Theta_i = \Theta_0,$$

wobei $\Theta_0$ der Winkel des ersten Bragg-Maximums ist. In der Realität besitzen die Bragg-Maxima, z.B. für Cu-K$\alpha$-Strahlung eine Halbwertsbreite FWHM ($\Delta\Theta_i) \approx 0,03°$ bis $0,05°$. Durch entsprechende Rückrechnung kann nachgewiesen werden, dass vom parabelförmigen Göbel Spiegel bei o.g. Halbwertsbreiten der Bragg-Maxima bei vorgegebenen $\lambda_0$ nur Teile von H bis annähernd 50 $\mu$m vollständig abgebildet werden können. Das bedeutet bei Nutzung eines Punktbrennfleckes, dass die überwiegende Restfläche von H Falschlicht $\lambda \# \lambda_0$ erzeugt, das nicht bzw. sehr schwer von der nutzbaren Strahlung mit der Wellenlänge $\lambda_0$ separiert werden kann. Aus diesem Grunde werden Röntgenoptiken, die Parallelstrahlung erzeugen, nahezu ausschließlich in Kombination mit einem Strichfokus an Laborröntgenquellen eingesetzt. Nur mit einem Strichfokus mit typischen Breiten von H = 0,04 mm haben $\Delta\Theta$ und $\Delta\Phi$ die gleiche Größe. Bei Nutzung von punktförmigen Primärstrahlquellflächen, z.B. den Punktbrennflecken von Laborröntgenröhren können lediglich 5-10% des Brennfleckes mit einer Breite von mindestens 0,4 mm in horizontaler und einer Höhe von 1,2mm in vertikaler Richtung genutzt werden, so dass hohe Leistungsverluste in Kauf genommen werden müssen.

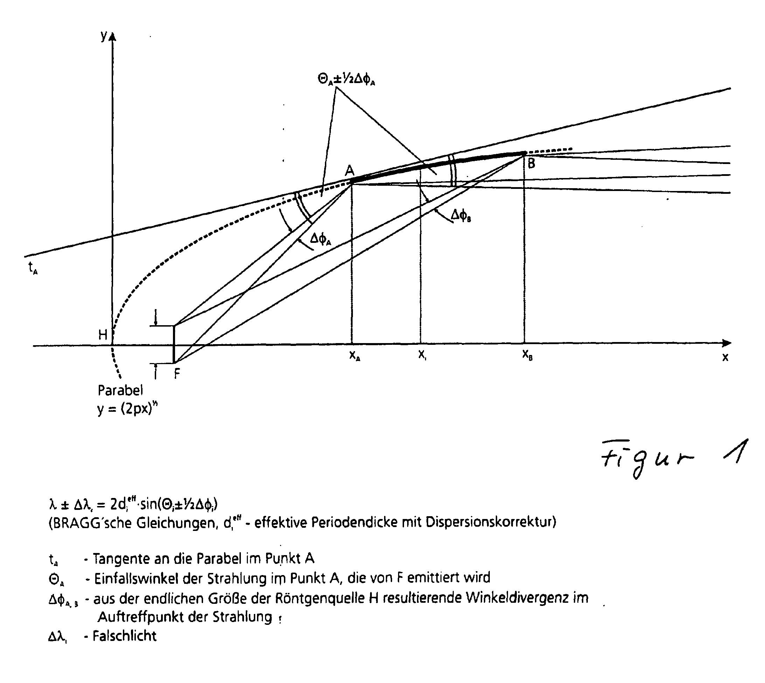

Demzufolge liegt die nutzbare Intensität der ausgewählten Wellenlänge der Röntgenstrahlung entsprechend niedrig und von der übrigen Restfläche, die immerhin 90-95 % ausmachen, wird Falschlicht $\Delta\lambda_i$ gemäß der Bragg-Gleichung dem parallelen Röntgenstrahl überlagert. Eine entsprechende Strahlführung mit den entsprechenden Winkeln ist in Figur 1 dargestellt.

Wird beispielsweise der Punktfokus einer Laborröntgenquelle über eine Fläche H x B = 1,2 * 0,4 mm benutzt, können $\Delta\Phi$-Werte ($\Delta\Phi$ = aus der endlichen Größe der Röntgenstrahlungsquelle H resultierende Winkeldivergenz im Auftreffpunkt der Strahlung auf dem Multischichtsystem) in der Größenordnung des Bragg-Winkels erster Ordnung erreicht werden, d.h. $\Delta\Phi \approx \Theta_i$ und $\Delta\Phi \gg \Delta\Theta_i$, so dass vom Multischichtsystem in fast jeder Position die ausgewählte Wellenlänge $\lambda_0$ der Röntgenstrahlung reflektiert wird. Auch mit zusätzlichen Blenden im Strahlengang der Röntgenstrahlung ist es nur sehr schwer bzw. ist es unmöglich, den gewünschten parallelen Nutzröntgenstrahl mit $\lambda_0$ exakt auszublenden und zu justieren, selbst bei Verwendung eines energieauflösenden Detektors.

Insbesondere für einen Einsatz bei der Einkristalldiffraktometrie kann es aber erforderlich sein, wegen der relativ kleinen Kristallitgröße (< 0,3 mm $\varnothing$) für die Bestrahlung solcher kleinen Proben einen punktförmigen Querschnitt der Röntgenstrahlung, bevorzugt mit Durchmessern im Bereich von s 0,5 mm einzusetzen.

In diesem Fall kommen die Vorteile der Verwendung von bekannten Göbel Spiegeln nicht voll zur Wirkung, unabhängig davon, ob Strahlung mit einem Punkt- oder Strichfokus eingesetzt wird. Zum einen werden bei Kombination von Göbel Spiegel(n) und Lochblenden mit einer Öffnung von 0,5 mm, mehr als 90 % der Intensität des Parallelstrahls (Parallelstrahlbreite zwischen 0,4 - 2 mm) eines Strichbrennfleckes mit einer Breite von 12 mm absorbiert oder es können nur ca. 5 % eines Punktbrennfleckes mit einer vertikalen H Größe von 0,4 - 1,2 mm und einer horizontalen H Größe von 1,2 mm mit den Göbel Spiegeln, wie bereits allgemein erklärt, genutzt werden. Außerdem treten bei der Nutzung punktförmiger Primärstrahlung Probleme bei der erforderlichen exakten Justierung und Falschlichtunterdrückung auf.

Aus diesen Gründen wurden bisher in der Einkristalldiffraktometrie in der Regel spezielle Graphit-Monochromatoren (HOPG-hochorientierter pyrolytischer Graphit) in Kombination mit Monokapillaren bzw. Lochblenden eingesetzt. Dadurch wird die gegenüber den Göbel Spiegeln um den Faktor drei bis vier kleinere Reflektivität eines solchen Graphit-Monochromators, bei der Monochromatisierung der Röntgenstrahlung, in Kauf genommen, da die Divergenz der Primärstrahlung je nach verwendeter Blende, im Bereich von ca. 0,2° bis 0,3°, also ca. 10-mal größer als die eines Göbel Spiegels ist, wodurch insgesamt zwar die Auflösung verringert, aber ein höherer Gesamtphotonenfluss durch Lochblenden erreicht werden kann. Zusätzlich gleicht diese verhältnismäßig große Divergenz/Akzeptanz eines Graphit-Monochromators gegebenenfalls auftretende Lageveränderungen des Röntgenquellenbrennflecks (wie z.B. Drehanoden) aus. Die als Mosaizität bezeichnete Verkippung der einzelnen Graphit-Kristallite zueinander im Graphit-Monochromator sichert, dass jedes einzelne Röntgenphoton der ausgewählten Wellenlänge auf seinem Weg durch den Graphit-Monochromator mit hoher Sicherheit auf ein Kristallit treffen kann, dessen Netzebenen in Reflexionsstellung stehen, so dass letztendlich die volle Querschnittsfläche eines punktförmigen Fokusses über die Reflexion an Netzebenen abgebildet werden kann.

Außerdem ist aus DE 44 07 278 A1 ein Röntgen-Analysegerät bekannt. Dabei wird divergente Röntgenstrahlung einer Röntgenröhre auf einen so genannten Göbelspiegel gerichtet, mit diesem monochromatisiert und dann als Parallelstrahlung auf eine zu analysierende Probe gerichtet.

Es ist daher Aufgabe der Erfindung, eine für die röntgenanalytische Anwendung geeignete Anordnung vorzuschlagen, mit der die Röntgenstrahlung eines Punktbrennfleckes einer Röntgenstrahlquelle mit hoher Genauigkeit monochromatisiert, fokussiert und gegebenenfalls in Parallelstrahlung erhöhter Photonendichte umgewandelt werden kann.

Erfindungsgemäß wird diese Aufgabe mit einer Anordnung, die die Merkmale des Anspruchs 1 aufweist, gelöst. Vorteilhafte Ausgestaltungsformen und Weiterbildung der Erfindung können mit den in den untergeordneten Ansprüchen genannten Merkmalen erreicht werden.

Die erfindungsgemäße Anordnung verwendet von einem Punktbrennfleck einer Röntgenstrahlquelle ausgehende nahezu parallele Röntgenstrahlung mit bekanntermaßen höherer auf die Strahlhöhe bezogener Photonendichte, als dies bei Röntgenstrahlquellen mit einem strichförmigen Brennfleck der Fall ist. Im Anschluß an die Röntgenstrahlquelle ist im Strahlengang der Röntgenstrahlung eine Blende angeordnet, die den Teil der Röntgenstrahlung ausblendet, der unmittelbar, d.h. ohne die Beeinflussung weiterer röntgenoptischer Elemente auf eine Probe auftreffen kann, z.B. bei BRAGG-Brentano-Geometrie.

Dabei sollte der Punktbrennfleck der Röntgenstrahlquelle ein Verhältnis Breite (horizontal H) zu Höhe (vertikal H) mindestens 4:1 aufweisen.

Im Anschluß an diese Blende ist im Strahlengang ein röntgenoptisches Element, das die Röntgenstrahlung reflektiert, angeordnet. Dieses Element ist in Parabelform gekrümmt und demzufolge wird die auf dieses Element auftreffende und von dort reflektierte Röntgenstrahlung fokussiert. Des weiteren ist auf dem reflektierenden Element ein Gradienten-Multischichtsystem, wie es auch bei den an sich bekannten Göbel Spiegeln eingesetzt wird, ausgebildet. Mit dem Gradienten-Multischichtsystem kann die einfallende Röntgenstrahlung unabhängig vom Auftreffort auf dem reflektierenden Element sehr gut monochromatisiert werden, so dass eine von unerwünschten Wellenlängen freie Röntgenstrahlung erzeugt wird, die in dieser Form für bestimmte Analysetechniken bereits nutzbar ist. Die bereits erwähnte Blende, die zwischen Röntgenstrahlquelle und reflektierendem Element angeordnet ist, kann als Primärblende (z.B. Vertikalblende, Schneidblende) ausgebildet werden.

Eine zweite Blende ist im Nachgang zum reflektierenden Element, also im Strahlengang der fokussierten Röntgenstrahlung angeordnet um Röntgenstrahlung im Wellenlängenbereich, der für die jeweilige Analyse unerwünscht ist, zu absorbieren. Vorteilhaft ist eine solche Blende so anzuordnen, dass ihre Öffnung im Fokus der jeweiligen vorgegebenen Wellenlänge $\lambda_0$ angeordnet ist, da in diesem Fall der größte Teil der monochromatisierten Röntgenstrahlung genutzt und Röntgenstrahlung im Fremdwellenlängenbereich vollständig ausgeblendet werden kann. Die Blendengröße kann kleiner als die herkömmliche Strichbreite von Laborröntgenquellen sein und bewirkt bei nachfolgenden optischen Elementen eine Verringerung der Divergenz.

Außerdem ist ein zweites reflektierendes Element, das konkav in Parabelform gekrümmt und ebenfalls mit einem Gradienten-Multischichtsystem beschichtet ist, im Nachgang zum ersten reflektierenden Element angeordnet. Mit diesem reflektierenden Element wird die fokussierte divergente Röntgenstrahlung zurück in einen Parallelstrahl umgewandelt, der gegenüber der Kombination Strichfokus mit Göbel Spiegel eine größere Photonendichte bezogen auf die nutzbare Strahlhöhe von maximal 1 mm aufweist, so dass diese Strahlung zu Analysezwecken auch auf kleinen Probenflächen effektiv genutzt und die Meßempfindlichkeit erhöht werden kann. Mit einem solchen zweiten reflektierenden Element kann die Röntgenstrahlung nochmals monochromatisiert werden.

Zu Detektionszwecken kann die mit den bereits erwähnten röntgenoptischen Elementen beeinflusste Röntgenstrahlung auf eine Probe gerichtet und die von der Probe gestreute Röntgenstrahlung mit einem Detektor erfasst werden, wobei die Intensitätsverteilung als Funktion des Streuwinkels detektiert wird und/oder ein eneregieauflösender Detektor von der Probe ausgehend, Fluoreszenzstrahlung erfassen kann.

Mit einer Anordnung, die wie bereits erwähnt, zwei reflektierende Elemente verwendet, ist es möglich, eine Kompression des Strahlquerschnittes der parallelen Röntgenstrahlung zu erreichen. Dies bedeutet, dass die Strahlbreite der aus dem Punktbrennfleck der Röntgenstrahlquelle austretenden Röntgenstrahlung größer als die Strahlbreite der vom zweiten reflektierenden Element reflektierten parallelen monochromatisierten Röntgenstrahlung ist und demzufolge dadurch die Photonendichte erhöht werden kann. Hierzu können unter Berücksichtigung der Reflektivität des auf dem zweiten reflektierenden Elementes ausgebildeten Gradienten-Multischichtsystems mehrere Parameter herangezogen werden. Dies ist z.B. die Parabelform, die Länge der beiden reflektierenden Elemente und/oder ihre Anordnung in Bezug zueinander, wobei letztgenanntes insbesondere der Abstand der beiden reflektierenden Elemente zueinander ist, da er die Größe der Abbildung der Röntgenstrahlung, die vom ersten reflektierenden Element reflektiert worden ist, als divergente, fokussierte Röntgenstrahlung auf dem zweiten reflektierenden Element bestimmt.

Mit der erfindungsgemäßen Anordnung kann die polychromatische aus einem Punktbrennfleck einer Röntgenstrahlquelle austretende und entsprechend der Divergenz/Akzeptanz des ersten reflektierenden Elementes parallele Röntgenstrahlung nahezu vollständig in einen monochromatischen und bei Verwendung der zwei reflektierenden Elemente in einen punktförmigen Parallelstrahl umgewandelt werden, ohne dass zusätzliche Blenden, deren Öffnungen kleiner als der Punktbrennfleck der Röntgenstrahlquelle sind, benutzt werden müssen. Es können dadurch relativ kleine Probenflächen mit hoher Ortsauflösung analysiert werden. Mit einer solchen erfindungsgemäßen Ausbildung können Probenflächen ausgewertet werden, die s der des jeweiligen Punktbrennfleckes der genutzten Röntgenstrahlquelle (z.B. Laborröntgenröhren mit Fest- bzw. Drehanoden oder transportabler Kleinleistungsröhren) sind. Gegenüber den aus dem Stand der Technik bekannten Graphit-Monochromatoren kann in der Abbildungsebene eine um den Faktor fünf kleinere Divergenz und demzufolge eine genauere Auflösung erreicht werden. Gegenüber den bekannten Parallelstrahloptiken wird die höhere Brillanz von Punktbrennflecken für die Charakterisierung von Proben auf Flächen, die ≤ der Größe der jeweiligen Punktbrennfleckfläche sind, erreicht. Außerdem ist die nutzbare Intensität der Röntgenstrahlung an der Probe erheblich erhöht, wobei sich insbesondere die größere Reflektivität der Gradienten-Multischichtsysteme gegenüber der geringeren Reflektivität der Graphit-Monochromatoren und die Verringerung der Verluste an Blenden diesbezüglich günstig auswirken.

Gegenüber den bekannten Anordnungen mit Göbel Spiegel an Strichbrennflecken treten keine Beschränkungen bezüglich des dabei erforderlichen minimalen Abstands eines Spiegels zum Röhrenfokus, die sich konstruktionsbedingt aus der Bauart der Röhrenschutzgehäuse ergeben, auf. Das erste reflektierende Element kann an jedes Röhrenschutzgehäuse von Röntgenstrahlquellen angesetzt werden. Es gibt keine Einschränkung bezüglich des Abstandes des Fokus der Röntgenstrahlquellen zum ersten reflektierenden Element, da nur der parallele Anteil der austretenden Röntgenstrahlung verwendet wird.

Das zweite reflektierende Element, auf dem die divergente Röntgenstrahlung in Strichform abgebildet und nach Reflexion als Parallelstrahl vorliegt, kann bei bestimmten technisch realisierbaren Schichtdickengradienten beliebig nahe hinter den Strichfokus, der mit dem ersten reflektierenden Element erzeugt worden ist, angeordnet werden.

Bevorzugt wird das zweite reflektierende Element so angeordnet, dass die Positionen seines Fokus und der Öffnung der Blende, die nachfolgend an das erste reflektierende Element angeordnet ist, übereinstimmen. Insbesondere eignet sich die Kombination zweier Parallelstrahloptiken in der beschriebenen Form zur Kompression des Strahlquerschnittes z.B. auch an von Synchrotronen ausgehender Strahlung im Röntgenbereich.

Nachfolgend soll die Erfindung beispielhaft näher erläutert werden.

Dabei zeigen:

Figur 1    eine schematische Darstellung der Winkel verhältnisse von divergenter Röntgenstrahlung, die mit Göbel Spiegeln in Parallelstrahlung umgewandelt wird, nach dem Stand der Technik und

Figur 2    den schematischen Aufbau für ein Beispiel einer erfindungsgemäßen Anordnung.

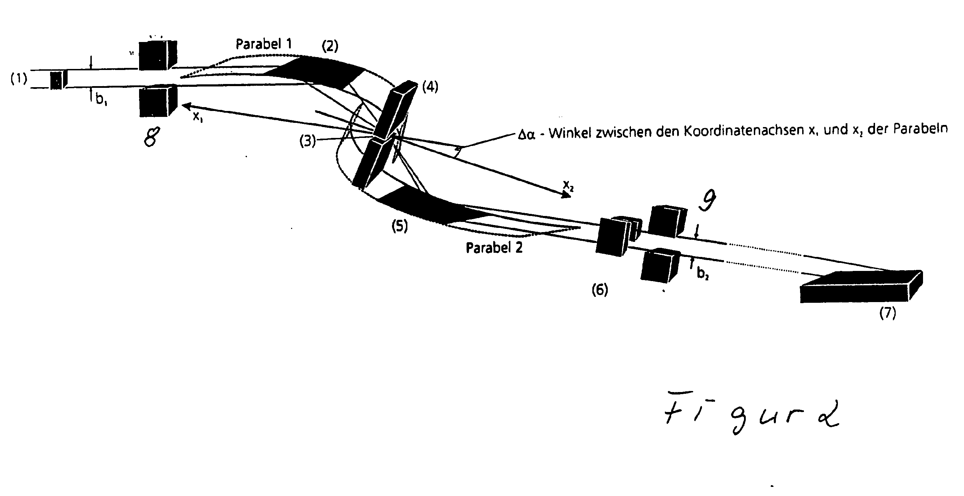

Bei dem in Figur 2 gezeigten Beispiel einer erfindungsgemäßen Anordnung wird aus einem Punktbrennfleck einer Röntgenstrahlquelle 1 austretende parallele Röntgenstrahlung mit ebenfalls punktförmigem Primärstrahlquerschnitt, mit einer Strahlbreite $b_1$ (vertikale Größe H) auf ein parabelförmig gekrümmtes, reflektierendes Element 2, auf dem ein Gradienten-Multischichtsystem ausgebildet ist, gerichtet. Das reflektierende Element 2 ist wie ein bekannter Göbel Spiegel ausgebildet, wobei für die jeweils gewünschte Parabelform und das Layout geeigneter Gradienten-Multischichtsysteme die Dimensionierungsvorschriften bekannt sind, so dass eine Anpassung an die Strahlbreite der punktförmigen Primärstrahlung, die Auswahl einer vorgebbaren Röngtenstrahlungswellenlänge, wie die Lage des Fokus, der vom reflektierenden Element 2 divergent reflektierten, monochromatisierten Röntgenstrahlung berücksichtigt werden können.

Zur Ausblendung von Röntgenstrahlung, die als polychromatische Strahlung unmittelbar auf eine Probe 7 auftreffen kann, ist eine Blende 8 im Anschluß an den Punktbrennfleck der Röntgenstrahlquelle 1 angeordnet. Die Blende 8 kann als Primärblende ausgebildet sein, mit der Röntgenstrahlung, die unterhalb des in Figur 2 dargestellten parallelen, punktförmigen Primärstrahles verläuft absorbiert werden kann. Gegebenenfalls kann auf den Teil einer Blende 8, der oberhalb dieser Röntgenstrahlung, wie in Figur 2 gezeigt, angeordnet ist, verzichtet werden. Die Blende 8 ist dann eine sogenannte Schneidblende.

Durch die in Figur 2 gezeigte zweite Blende 4 eingesetzt, wird die in Strichform fokussierte, monochromatische Röntgenstrahlung gerichtet, und Röntgenstrahlung mit unerwünschten Wellenlängen werden von der Blende absorbiert. Vorteilhaft ist die Öffnung der Blende 4 im Fokus 3, der vom reflektierenden Element 2 reflektierten Röntgenstrahlung bei der vorgegebenen Wellenlänge angeordnet.

Zur Ausbildung einer parallelen monochromatischen Röntgenstrahlung, die zur Analyse genutzt werden kann, ist ein zweites reflektierendes Element 5, das ebenfalls in Parabelform gekrümmt und mit einem Gradienten-Multischichtsystem versehen ist, im Strahlengang der divergenten, monochromatischen und fokussierten Röntgenstrahlung angeordnet.

Das zweite reflektierende Element 5 sollte ebenfalls so angeordnet sein, dass sein Fokus ebenfalls mit dem Fokus 3, des ersten reflektierenden Elementes 2, also mit der Lage der Öffnung der Blende 4 übereinstimmt.

In der Darstellung gemäß Figur 2 ist außerdem zu erkennen, dass entsprechend von Akzeptanz oder Divergenz des reflektierenden Elementes 2 lediglich der parallel $\Delta\Theta$ aus dem Punktbrennfleck der Röntgenstrahlquelle 1 mit der Höhe H ($b_1$) austretende Teil der polychromatischen Strahlung monochromatisiert und mit dem relfektierenden Element 2 reflektiert und fokussiert wird. Das Gradienten-Multischichtsystem und die Parabelform des reflektierenden Elementes 2 sind dabei so gewählt, dass die Höhe $H \leq$ der Strahlbreite $b_1$ ist.

Die Öffnung der Blende 4, die wie bereits erwähnt, mit dem Fokus übereinstimmen sollte, ist bevorzugt so zu wählen, dass die Bedingung $\Delta\Phi \leq \Delta\Theta$ erfüllt wird, wobei $\Delta\Phi$ der jeweiligen gewünschten Divergenz der Strahlung auf der Probe unter Annahme eines ideal gekrümmten zweiten reflektierenden Elementes 5 oder weiterer nachfolgender Elemente und $\Delta\Theta$ der jeweiligen Halbwertbreite des BRAGG-Maxima 1. Ordnung entlang des Schichtdickengradienten der reflektierenden Elemente sind.

Infolge der abbildenden Eigenschaften der Parabeln haben geringe Lageveränderungen des Punktbrennfleckes der Röntgenstrahlquelle 1 innerhalb der Strahlbreite $b_1$ keinen Einfluss auf die Lage des Fokus 3, so dass an der Blende 4 (Vertikalblende) nach der ersten Reflexion am ersten reflektierenden Element 2 eine divergent strahlende monochromatische Strichquelle zu verzeichnen ist, deren Ortsstabilität allein durch die Lage des reflektierenden Elementes 2 und dessen Form sowie dem Design des Gradienten-Multischichtsystems bestimmt wird.

Wird das zweite reflektierende Element so angeordnet, dass auch sein Parabelfokus mit dem Fokus 3, also der Lage der Öffnung der Vertikalblende 4 zusammenfällt, kann aus der divergent strahlenden monochromatischen Strichquelle wieder eine Punktquelle, die auch in der Abbildungsebene monochromatisch parallel strahlt, erhalten werden.

Die Längen und Parabelparameter der reflektierenden Elemente 2 und 5 sowie der Abstand zueinander bestimmen die Strahlbreite $b_2$ der monochromatischen, parallelen Röntgenstrahlung im Nachgang zum reflektierenden Element 5, was bei geeigneter Wahl der zur Verfügung stehenden Parameter auch zu einer Verkleinerung der Strahlbreite in Bezug zur Strahlbreite $b_1$ der eingesetzten Primärstrahlung und demzufolge zur Erhöhung der Photonenflußdichte führen kann. Hierzu muss die Bedingung erfüllt werden, dass $b_1/b_2 \cdot R(5) \geq 1$ ist, wobei $R(5)$ die mittlere Reflektivität des Gradienten-Multischichtsystems auf dem reflektierenden Element 5 ist.

Die Divergenz der vom reflektierenden Element 5 reflektierten Parallelstrahlung wird senkrecht zur Abbildungsebene durch die Größe des Punktbrennfleckes der Röntgenstrahlquelle 1 und die Größe der Detektorfläche sowie den Abständen der einzelnen Elemente bestimmt. Eine zusätzliche Begrenzung in dieser Ebene kann durch eine Horizontalblende 6 erreicht werden. Der Abstand zwischen dieser Horizontalblende 6 und dem Punktbrennfleck der Röntgenstrahlquelle 1 kann in bestimmten Grenzen variiert werden, so dass eine für ein Messproblem geeignete Strahldivergenz, bei vorgegebener Punktbrennfleckgröße eingestellt werden kann.

Im Gegensatz zur Darstellung in Figur 2 kann die Blende 6 auch zwischen den beiden reflektierenden Elementen 2 und 5 angeordnet werden.

Eine Alternative hierzu ist auch eine Ausbildung der Blende 4 mit entsprechenden Begrenzungen des Schlitzes an den Seiten.

Zur Unterdrückung von Streuröntgenstrahlung kann eine weitere Vertikalblende 9 zwischen dem reflektierenden Element 5 und der Probe 7 angeordnet werden, wobei die Öffnung dieser Vertikalblende 9 der Strahlbreite $b_2$ der parallelen vom reflektierenden Element 5 ausgehenden Röntgenstrahlung entsprechen sollte.

## Patentansprüche

1. Anordnung für röntgenanalytische Anwendungen, mit einer Röntgenstrahlquelle und einem konkav, in Parabelform gekrümmten reflektierenden, Röntgenstrahlung fokussierenden und monochromatisierenden Element, das mit einem Gradienten-Multischichtsystem beschichtet ist,
   **dadurch gekennzeichnet, dass** Röntgenstrahlung, die von einem punktförmigen Brennfleck ausgeht auf das reflektierende Element (2) und von dem die fokussierte, monochromatisierte Röntgenstrahlung auf ein zweites konkaves, in Parabelform gekrümmtes, reflektierendes Element (5), das mit einem Gradienten-Multischichtsystem beschichtet und auf das die divergente monochromatisierte Röntgenstrahlung vom ersten reflektierenden Element (2), zur Erzeugung paralleler Röntgenstrahlung und dann auf eine Probe gerichtet ist, wobei zwischen Röntgenstrahlquelle (1) und reflektierendem Element (2) eine Blende (8) und
   im Fokus (3), der mit dem reflektierenden Element (2) fokussierten Röntgenstrahlung eine zweite Blende (4) angeordnet sind.

2. Anordnung nach Anspruch 1,
   **dadurch gekennzeichnet, dass** die zweite Blende (4) im Fokus (3) des zweiten reflektierenden Elementes (5) angeordnet ist.

3. Anordnung nach einem der Ansprüche 1 oder 2,
   **dadurch gekennzeichnet, dass** zwischen zweitem reflektierenden Element (5) und Probe (7) mindestens eine Blende (6, 9) angeordnet ist.

4. Anordnung nach Anspruch 3,
   **dadurch gekennzeichnet, dass** die Blende(n) eine Horizontalblende (6) und/oder Vertikalblende (9) ist/sind.

5. Anordnung nach einem der Ansprüche 1 bis 4,
   **dadurch gekennzeichnet, dass** die Größe der Öffnung, der nach dem ersten reflektierenden Element (2) angeordneten Blende (4) für eine vorgegebene Wellenlänge $\lambda_0$ gewählt ist, dass nur der parallele Anteil so der polychromatischen Strahlung des Punktbrennfleckes der Röntgenstrahlquelle(1) mit der Divergenz $\Delta\Phi$ als Funktion der Größe der Blende (4) die Probe durch die Blende (4) erreicht, wobei die Bedingung $\Delta\Phi \leq \Delta\Theta_0$ des Gradienten-Multischichtsystems auf jedem Flächenelement, des ersten reflektierenden Elementes (2) erfüllt ist.

**6.** Anordnung nach einem der Ansprüche 1 bis 5,
**dadurch gekennzeichnet, dass** die Parabelform, die Länge der beiden reflektierenden Elemente (2, 5) und/oder ihre Anordnung in Bezug zueinander so gewählt sind, dass die Strahlbreite $b_2$ der parallelen vom zweiten reflektierenden Element (5) reflektierten Röntgenstrahlung kleiner als die Strahlbreite $b_1$ der auf das erste reflektierende Element (2) auftreffenden Primärstrahlung ist.

**7.** Anordnung nach einem der Ansprüche 1 bis 6,
**dadurch gekennzeichnet, dass** von der Probe (7) gestreute Intensität der Röntgenstrahlung in Abhängigkeit vom Streuwinkel durch einen Detektor erfassbar ist.

**8.** Anordnung nach einem der Ansprüche 1 bis 7,
**dadurch gekennzeichnet, dass** mit einem zweiten Detektor von der Probe (7) ausgehende Fluoreszenzstrahlung detektierbar ist.

**9.** Anordnung nach einem der Ansprüche 1 bis 8,
**dadurch gekennzeichnet, dass** die Röntgenstrahlquelle (1) ein Synchrotron, der Punktbrennfleck einer Laborröntgenröhre mit Fest- oder Drehanode oder der Punktbrennfleck einer transportablen Kleinleistungsröhre ist.

**Claims**

**1.** A device for X-ray-analytical applications, with an X-ray source and a reflecting element which is curved in a concave manner in the form of a parabola and which focuses and monochromatizes X-ray radiation and which is coated with a gradient and multi-layer system, **characterized in that** X-ray radiation which issues from a focal spot in the form of a point is directed onto the reflecting element (2) from which the focused, monochromatized X-ray radiation is directed onto a second concave reflecting element (5) which is curved in the form of a parabola and which is coated with a gradient and multi-layer system and onto which the divergent monochromatized X-ray radiation is directed from the first reflecting element (2) in order to produce parallel X-ray radiation and is then directed onto a sample, wherein a diaphragm (8) is arranged between the X-ray source (1) and the reflecting element (2), and a second diaphragm (4) is arranged in the focus (3) of the X-ray radiation focused by the reflecting element (2).

**2.** A device according to Claim 1, **characterized in that** the second diaphragm (4) is arranged in the focus (3) of the second reflecting element (5).

**3.** A device according to one of Claims 1 or 2, **characterized in that** at least one diaphragm (6, 9) is arranged between the second reflecting element (5) and the sample (7).

**4.** A device according to Claim 3, **characterized in that** the diaphragm or diaphragms is or are a horizontal diaphragm (6) and/or a vertical diaphragm (9).

**5.** A device according to any one of Claims 1 to 4, **characterized in that** the size of the opening of the diaphragm (4) arranged after the first reflecting element (2) is selected for a pre-determined wavelength $\lambda_0$, only the parallel portion of the polychromatized radiation of the focal spot - in the form of a point - of the X-ray source (1) with the divergence $\Delta\Phi$ as a function of the size of the diaphragm (4) reaches the sample through the diaphragm (4), wherein the condition $\Delta\Phi \leq \Delta\Theta_0$ of the gradient and multi-layer system is met on each surface element of the first reflecting element (2).

**6.** A device according to any one of Claims 1 to 5, **characterized in that** the parabola shape, the length of the two reflecting elements (2, 5) and/or the arrangement thereof with respect to each other is or are selected in such a way that the beam width $b_2$ of the parallel X-ray radiation reflected by the second reflecting element (5) is smaller than the beam width $b_1$ of the primary radiation striking the first reflecting element (2).

**7.** A device according to any one of Claims 1 to 6, **characterized in that** the intensity of the X-ray radiation scattered by the sample (7) is capable of being detected by a detector in a manner dependent upon the scattering angle.

**8.** A device according to any one of Claims 1 to 7, **characterized in that** fluorescent radiation issuing from the sample (7) is capable of being detected by a second detector.

9. A device according to any one of Claims 1 to 8, **characterized in that** the X-ray source (1) is a synchrotron, the focal spot - in the form of a point - of a laboratory X-ray tube with a fixed or rotating anode or the focal spot - in the form of a point - of a transportable small-capacity tube.

## Revendications

1. Dispositif pour applications d'analyse aux rayons X, comprenant une source de rayons X et un élément réfléchissant concave incurvé en forme de parabole, focalisant et monochromatisant les rayons X, qui est revêtu d'un système multicouche à gradient, **caractérisé en ce que** des rayons X, qui sont issus d'un foyer de gaine ponctuel, sont dirigés sur l'élément réfléchissant (2) et, de là, les rayons X focalisés monochromatisés sont dirigés sur un second élément réfléchissant concave incurvé en forme de parabole (5), qui est revêtu d'un système multicouche à gradient, et sur lequel les rayons X monochromatisés divergents provenant du premier élément réfléchissant (2) sont appliqués pour générer des rayons X parallèles et, ensuite, sur un échantillon, un écran (8) étant agencé entre la source de rayons X (1) et l'élément réfléchissant (2) et un second écran (4) étant agencé au foyer (3) des rayons X focalisés avec l'élément réfléchissant (2).

2. Dispositif selon la revendication 1, **caractérisé en ce que** le second écran (4) est agencé au foyer (3) du second élément réfléchissant (5).

3. Dispositif selon l'une quelconque des revendications 1 ou 2, **caractérisé en ce qu'**au moins un écran (6, 9) est agencé entre le second élément réfléchissant (5) et l'échantillon (7).

4. Dispositif selon la revendication 3, **caractérisé en ce que** le ou les écrans est ou sont un écran horizontal (6) et/ou un écran vertical (9).

5. Dispositif selon l'une quelconque des revendications 1 à 4, **caractérisé en ce que** la taille de l'ouverture de l'écran (4) agencé après le premier élément réfléchissant (2) est choisie pour une longueur d'onde prédéterminée $\lambda_0$ de sorte que seule la fraction parallèle du rayonnement polychromatique du foyer de gaine ponctuel de la source de rayons X (1) avec la divergence $\Delta\Phi$ en fonction de la taille de l'écran (4) atteigne l'échantillon à travers l'écran (4), la condition $\Delta\Phi \leq \Delta\Theta_0$ du système multicouche à gradient étant satisfaite sur chaque élément de surface du premier élément réfléchissant (2).

6. Dispositif selon l'une quelconque des revendications 1 à 5, **caractérisé en ce que** la forme de parabole, la longueur des deux éléments réfléchissants (2, 5) et/ou leur agencement l'un par rapport à l'autre sont choisis de manière que la largeur de rayonnement $b_2$ des rayons X parallèles réfléchis par le second élément réfléchissant (5) soit inférieure à la largeur de rayonnement $b_1$ des rayons primaires rencontrant le premier élément réfléchissant (2).

7. Dispositif selon l'une quelconque des revendications 1 à 6, **caractérisé en ce que** l'on peut détecter l'intensité des rayons X dispersés par l'échantillon (7) en fonction de l'angle de dispersion au moyen d'un détecteur.

8. Dispositif selon l'une quelconque des revendications 1 à 7, **caractérisé en ce que** l'on peut détecter le rayonnement fluorescent provenant de l'échantillon (7) à l'aide d'un second détecteur.

9. Dispositif selon l'une quelconque des revendications 1 à 8, **caractérisé en ce que** la source de rayons X (1) est un synchrotron, le foyer de gaine ponctuel d'un tube à rayons X de laboratoire avec anode fixe ou rotative ou le foyer de gaine ponctuel d'un tube de faible puissance transportable.

Parabel
$y = (2px)^{\frac{1}{n}}$

*Figur 1*

$$\lambda \pm \Delta\lambda_i = 2d_i^{\text{eff}} \cdot \sin(\Theta_i \pm \tfrac{1}{2}\Delta\phi_i)$$

(BRAGG'sche Gleichungen, $d_i^{\text{eff}}$ - effektive Periodendicke mit Dispersionskorrektur)

$t_A$    - Tangente an die Parabel im Punkt A

$\Theta_A$    - Einfallswinkel der Strahlung im Punkt A, die von F emittiert wird

$\Delta\phi_{A,B}$ - aus der endlichen Größe der Röntgenquelle H resultierende Winkeldivergenz im Auftreffpunkt der Strahlung

$\Delta\lambda_i$    - Falschlicht

EP 1 360 699 B1

Δα - Winkel zwischen den Koordinatenachsen $x_1$ und $x_2$ der Parabeln

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9604665 A1
- DE 4443853 A1
- US 6014423 A
- US 6041099 A
- DE 4407278 A1

**In der Beschreibung aufgeführte Nicht-Patentliteratur**

- Multilayer for X-Ray Optical Applications. **T.W. BARBEE JR.** X-Ray Microscopy. Springer Verlag, 1984, 144-162
- **U.W. ARNDT.** *Appl. Crystallograph.,* 1990, vol. 23, 161-168
- **P.KIRPATRICK.** *J. Opt. Soc. Am.,* 1948, vol. 38, 766